# EUROPÄISCHE PATENTANMELDUNG

(11) **EP 4 362 283 A1**
(43) Veröffentlichungstag der Anmeldung: **01.05.2024**
(21) Anmeldenummer: 22203251.8
(22) Anmeldetag: 24.10.2022
(51) Int. Cl.: H02K 1/14

(54) **STATORBLECH UND STATORBLECHPAKET**

(71) Anmelder: Hilti Aktiengesellschaft, 9494 Schaan (LI)
(72) Erfinder: Ruff, Christian, 86391 Stadtbergen (DE)
(74) Vertreter: Hilti Aktiengesellschaft Corporate Intellectual Property

(57) **Zusammenfassung**

Statorblech für ein Statorblechpaket eines bürstenlosen Gleichstrommotors, wobei das Statorblech in Umfangsrichtung vollständig geschlossenen ist und eine Mehrzahl von Sternelementen aufweist, wobei zwei benachbarte Sternelemente jeweils durch eine Brücke miteinander verbunden sind, wobei die Brücke in radialer Richtung durch wenigstens eine Nut verjüngt ist.

## Beschreibung

Die vorliegende Erfindung betrifft ein Statorblech für ein Statorblechpaket eines bürstenlosen Gleichstrommotors. Das Statorblech ist in Umfangsrichtung vollständig geschlossen und weist eine Mehrzahl von Sternelementen auf, wobei zwei benachbarte Sternelemente jeweils durch eine Brücke miteinander verbunden sind.

Statorbleche der eingangs genannter Art sind grundsätzlich aus dem Stand der Technik bekannt. EP 2 507 896 B1 offenbart Verfahren zur Herstellung eines Stators für einen Elektromotor, bei dem eine Anzahl von Statorblechen zu einem sternförmigen Blechpaket aus in Umfangsrichtung geschlossenen Statorblechen mit über Pohlschuhstege miteinander verbundenen Einzelzähnen und aus in Umfangsrichtung offenen Statorblechen mit unter Bildung einer polschuhseitigen Lücke zueinander beabstandeten Einzelzähnen gestapelt werden.

Es ist Aufgabe der vorliegenden Erfindung ein Statorblech anzugeben, welches die Grundlage für ein vergleichsweise einfach und kostengünstig herstellbares Statorblechpaket schafft.

Die Aufgabe wird dadurch gelöst, dass die Brücke in radialer Richtung durch wenigstens eine Nut verjüngt ist. Es hat sich als vorteilhaft herausgestellt, wenn sich die Nut in axialer Richtung über die volle Dicke des Statorblechs erstreckt.

Die Erfindung schließt die Erkenntnis ein, dass Statorblechpakete des Standes der Technik - zum Erreichen bestimmter magnetischer Eigenschaften - Statorbleche unterschiedlichen Typs, d.h. sowohl in Umfangsrichtung geschlossene als auch in Umfangsrichtung offene Statorbleche, aufweisen müssen. Dementsprechend kommen auch Stanzwerkzeuge unterschiedlichen Typs zum Einsatz, was die Herstellung von Statorblechpakete vergleichsweise teuer macht.

In Abkehr vom Stand der Technik wird mit dem erfindungsgemäßen Statorblech die Grundlage für ein Statorblechpaket geschaffen, das beispielsweise aus einer Mehrzahl identischer Statorbleche bestehen kann.

In einer besonders bevorzugten Ausgestaltung weist zumindest eine der Brücken eine Nut auf, die in radialer Richtung nach innen geöffnet ist. Unter in radialer Richtung nach innen geöffnet soll insbesondere verstanden werden, dass die Nut in Richtung eines Mittelpunkts des Statorblechs geöffnet ist. In einer weiteren bevorzugten Ausgestaltung weist zumindest eine der Brücken eine Nut auf, die in radialer Richtung nach außen geöffnet ist.

Es hat sich als vorteilhaft herausgestellt, wenn ein durch die Nut verbleibender Restabschnitt einer ersten Brücke einen anderen radialen Abstand zu einem Mittelpunkt des Statorblechs aufweist, als ein durch die Nut verbleibender Restabschnitt einer zweiten Brücke.

In einer weiteren bevorzugten Ausgestaltung weist zumindest eine der Brücken eine in radialer Richtung nach innen geöffnete Nut und eine in radialer Richtung nach außen geöffnete Nut auf. Es hat sich als vorteilhaft herausgestellt, wenn ein durch die Nuten verbleibender Restabschnitt dieser Brücke einen anderen radialen Abstand zu einem Mittelpunkt des Statorblechs aufweist, als ein durch die Nut verbleibender Restabschnitt der ersten und zweiten Brücke.

Es hat sich als vorteilhaft herausgestellt, wenn das Statorblech paarweise gleichartig ausgebildete Brücken aufweist. In einer besonders bevorzugten Ausgestaltung sind die paarweise gleichartig ausgebildeten Brücken jeweils diametral zueinander angeordnet. In einer weiteren bevorzugten Ausgestaltung ist die Nut, bezogen auf die Umfangsrichtung, mittig zwischen zwei benachbarten Sternelementen angeordnet. In einer besonders bevorzugten Ausgestaltung ist die Brücke durch die Nut in radialer Richtung um wenigstens 50 Prozent verjüngt.

In einer weiteren bevorzugten Ausgestaltung ist das Statorblech zur Verwendung in einem Statorblechpaket eines bürstenlosen Gleichstrommotors mit drei Phasen vorgesehen. Dafür weist das Statorblech vorzugsweise genau sechs Sternelemente und genau sechs Brücken auf. Es hat sich als vorteilhaft herausgestellt, wenn genau zwei der insgesamt sechs Brücken jeweils lediglich eine Nut aufweisen, wobei diese Nuten in radialer Richtung nach innen geöffnet sind. Es hat sich weiterhin als vorteilhaft herausgestellt, wenn genau zwei der insgesamt sechs Brücken jeweils lediglich eine Nut aufweisen, wobei diese Nuten die in radialer Richtung nach außen geöffnet ist. Weiter bevorzugt weisen genau zwei der insgesamt sechs Brücken jeweils genau zwei Nuten auf, wobei - pro Brücke - genau eine Nut in radialer Richtung nach innen geöffnet ist und genau eine Nut in radialer Richtung nach außen geöffnet ist.

Bezüglich des Statorblechpakets wird die Aufgabe gelöst durch ein Statorblechpaket, welches eine Mehrzahl von identischen, in axialer Richtung aufeinandergestapelten Statorblechen der vorbeschriebenen aufweist, und insbesondere aus der Mehrzahl solcher Statorbleche besteht.

Es hat sich gezeigt, dass das erfindungsgemäße Statorblechpaket eine Reihe mechanischer und magnetischer Vorteile bietet. Aus mechanischer Sicht ist hervorzuheben, dass in jede Statorblechebene eine mechanische Verbindung zwischen jeweils benachbarten Sternelement besteht. Dies führt zu einer gleichmäßigeren Kraft-Verteilung des Pressverbands. Je nach Verdrehung der Statorbleche zueinander kann ein Rotorraum abgedichtet oder zumindest das Eindringen von Partikeln ab einer bestimmten Partikelgröße verhindert werden. Es hat sich gezeigt, dass das erfindungsgemäße Statorblechpaket aus magnetischer Sicht die Grundlage für ein leicht höheres durchschnittliches Drehmoment bei niedrigeren Schwankungen im Drehmoment und niedrigeren Eisenverlusten schafft. Die zwischen Stern und Jochring herrschenden Kräfte sind für alle Statorbleche gleichmäßig verteilt.

Es hat sich als besonders vorteilhaft herausgestellt, wenn zwei benachbarte Statorbleche inkongruent zueinander aufeinandergestapelt sind. In einer besonders bevorzugten Ausgestaltung ist das Statorblechpaket zur Verwendung in einem bürstenlosen Gleichstrommotors mit drei Phasen vorgesehen. In diesem Fall hat es sich als vorteilhaft herausgestellt, wenn zwei benachbarte Statorbleche um 120 Grad zueinander verdreht, insbesondere jeweils um 120 Grad zueinander verdreht sind. Eine Drehung kann um ein Einfaches oder Vielfaches des Quotienten aus 360 Grad und der Anzahl der Sternelemente ergeben. Im Beispiel von genau sechs Sternelementen also um 60 Grad, 120 Grad usw. Unter einer Drehung soll im Rahmen der vorliegenden Erfindung insbesondere eine Drehung um eine gedachte Rotationsachse eines in dem Statorblechpaket anzuordnenden Rotors verstanden werden. Alternativ oder zusätzlich können eines oder mehrere der identischen, in axialer Richtung aufeinandergestapelten Statorbleche um 180 Grad geklappt ("upside down") in das Statorblechpaket eingebracht sein. Es hat sich als vorteilhaft herausgestellt, wenn das Statorblechpaket frei von Einzelsternelementen ist, d.h. insbesondere frei von solchen Sternelementen ist, die nicht beidseitig mit einer Brücke in gleicher Ebene verbunden sind.

Die Erfindung führt ebenfalls auf einen bürstenlosen Gleichstrommotor, insbesondere einer elektrischen Handwerkzeugmaschine, wobei der bürstenlosen Gleichstrommotor ein Statorblechpaket der vorbeschriebenen Art aufweist.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigt:
- Fig. 1: ein bevorzugtes Ausführungsbeispiel eines Statorblechs;
- Fig. 2: ein bevorzugtes Ausführungsbeispiel eines Statorblechpakets; und
- Fig. 3: eine Schnittdarstellung des Statorblechpakets der Fig. 2.

### Ausführunqsbeispiele:

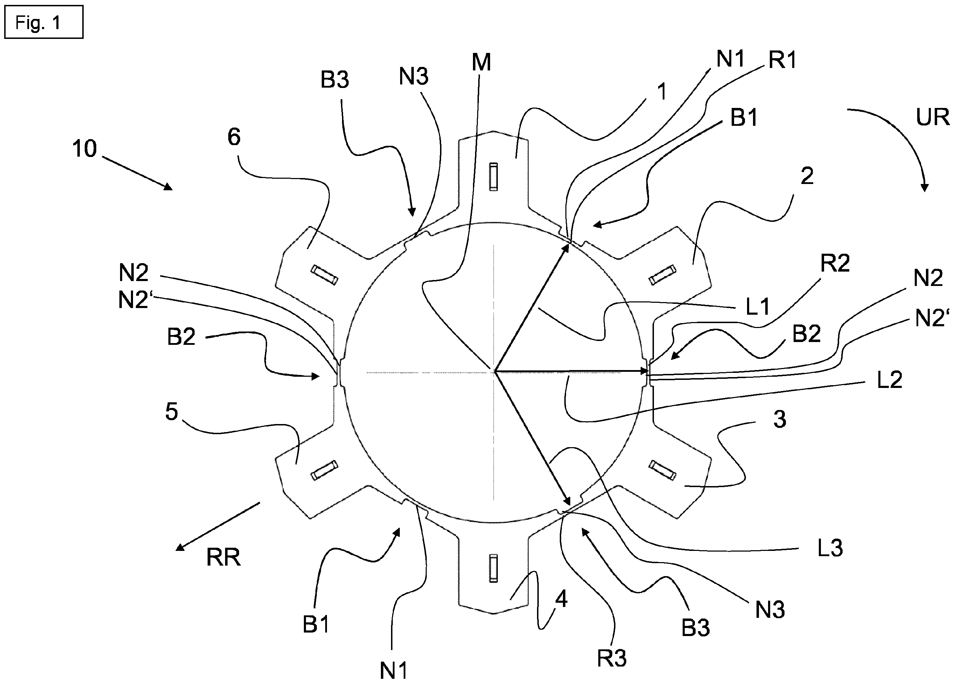

Ein bevorzugtes Ausführungsbeispiel eines erfindungsgemäßen Statorblechs 10 ist in Fig. 1 gezeigt. Das Statorblech 10 ist in Umfangsrichtung UR vollständig geschlossenen und weist beispielhaft sechs Sternelemente 1, 2, 3, 4, 5, 6 auf. Zwei benachbarte Sternelemente sind jeweils durch eine Brücke B1, B2, B3 miteinander verbunden. Insgesamt sind sechs Brücken vorgesehen. Damit kann das Statorblech 10 beispielsweise als Grundlage für ein Blechpaket eines 3-phasigen bürstenlosen Gleichstrommotors dienen.

Wie der Fig. 1 entnommen werden kann, weist das Statorblech 10 paarweise gleichartig ausgebildete Brücken B1, B2, B3 auf, die jeweils diametral zueinander angeordnet sind. Das Statorblech 10 verfügt demnach also über drei verschiedene "Brückentypen". Jede der Brücken B1, B2, B3 ist in radialer Richtung RR durch wenigstens eine Nut verjüngt.

Ein erste Brücke B1 ist ausgestattet mit einer Nut N1, die in radialer Richtung RR nach außen geöffnet ist. Eine weitere Brücke B3 weist eine Nut N3 auf, die in radialer Richtung RR nach innen geöffnet ist, d.h. in Richtung eines Mittelpunkts M des Statorblechs 10 geöffnet ist. Die Brücke B2 ist dadurch gekennzeichnet, dass sie sowohl eine in radialer Richtung RR nach innen geöffnete Nut N2 als auch und eine in radialer Richtung RR nach außen geöffnete Nut N2' aufweist. Die Nuten N1, N2, N2', N3 sind, bezogen auf die Umfangsrichtung UR, jeweils mittig zwischen zwei benachbarten Sternelementen angeordnet. Die Nuten N1, N2, N2', N3 erstrecken sich, bezogen auf die axiale Richtung des Statorblechs 10, über die gesamte Dicke des Statorblechs 10.

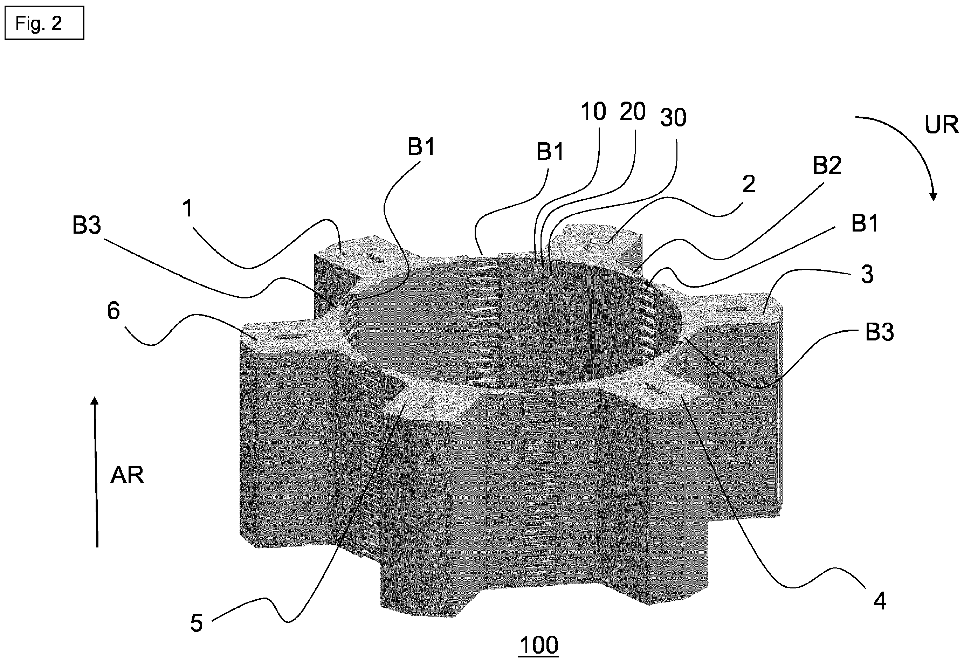

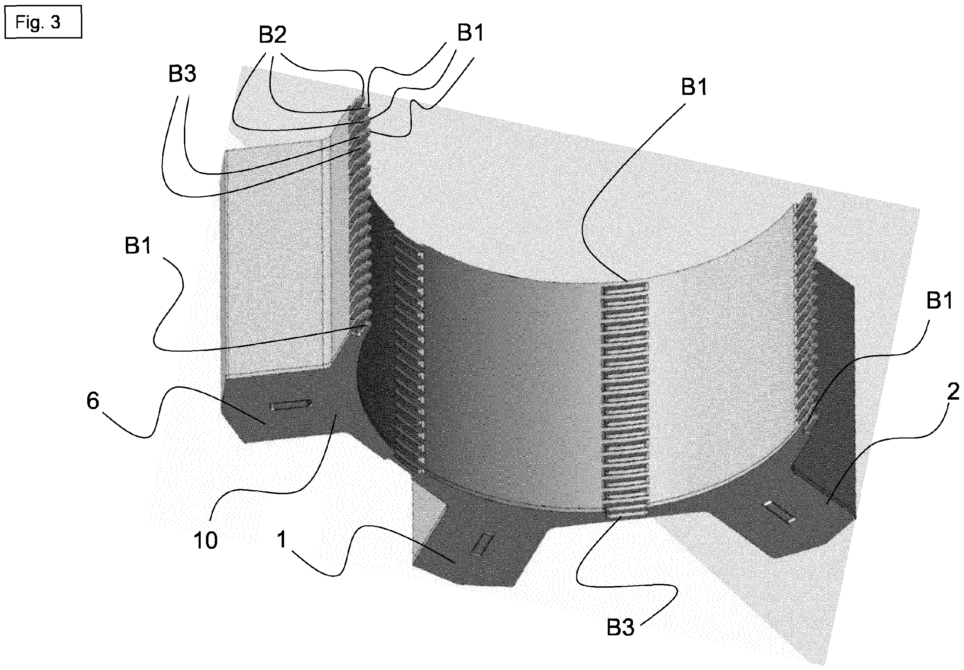

Durch die besagten Nuten N1, N2, N2', N3 verbleiben von den Brücken B1, B2, B3 sogenannte Restabschnitte R1, R2, R3 über welche das Statorblech 10 weiterhin ist in Umfangsrichtung UR vollständig geschlossenen ist. Durch ein konstruktives Positionieren der Restabschnitte R1, R2, R3 in verschiedenen Abständen zum Mittelpunkt M des Statorblechs 10 und ein anschließendes Rotieren eines jeweiligen Statorblechs im Statorblechpaket (vgl. Fig. 2 und 3) kann ein elektromagnetisch und mechanisch optimiertes Statorblechpaket geschaffen werden.

Ein durch die Nut N1 verbleibender Restabschnitt R1 der ersten Brücke B1 weist im vorliegenden Ausführungsbeispiel einen anderen, nämlich geringeren radialen Abstand L1 zum Mittelpunkt M des Statorblechs 10 auf, als ein durch die Nut N2 verbleibender Restabschnitt R2 der Brücke B2. Der radiale Abstand des Restabschnitts R2 in Fig. 1 mit L2 bezeichnet. Der durch die Nut N2 verbleibender Restabschnitt R2 der Brücke B2 weist wiederum einen geringeren radialen Abstand L2 zum Mittelpunkt M des Statorblechs 10 auf, als ein durch die Nut N3 verbleibender Restabschnitt R3 der Brücke B3. Der radiale Abstand des Restabschnitts R3 in Fig. 1 mit L3 bezeichnet. Im Ausführungsbeispiel der Fig. 1 gilt demnach L1 < L2 < L3.

Fig. 2 zeigt ein Statorblechpaket 100, das eine Mehrzahl von identischen, in axialer Richtung AR aufeinandergestapelten Statorbleche 10, 20, 30 aufweist. Es handelt sich um Statorbleche gemäß Fig. 1. Aus Gründen der vereinfachten Darstellung sind lediglich die ersten drei Statorbleche 10, 20, 30 mit Bezugszeichen versehen.

Wie der Fig. 2 entnommen werden kann, sind die Statorbleche 10, 20, 30 (bezogen auf die Rotationsachse eines hier nicht dargestellten Rotors) derart verdreht zueinander gestapelt, dass zwei benachbarte Statorbleche, also die Statorbleche 10 und 20 bzw. 20 und 30 inkongruent zueinander liegen. Mit anderen Worten liegen also stets jeweils zwei Brücken unterschiedlichen Typs aufeinander.

Im vorliegenden Beispiel sind die Statorbleche 10, 20, 30 (in der Blickrichtung von oben nach unten) jeweils um 120 Grad in Umfangsrichtung UR verdreht. D.h. die erste Brücke B1, welche zwischen erstem Sternelement 1 und zweiten Sternelement 2 des ersten Statorblechs 10 angeordnet ist, findet sich in Fig. 2 oben. Bezogen auf die Umfangsrichtung UR links davon in zweiter Ebene - also im zweiten Statorblech 20 - ist die erste Brücke (Brücke ersten Typs) ebenfalls als B1 bezeichnet. Es handelt sich dabei um diejenige erste Brücke, welche zwischen vierten Sternelement 4 und fünften Sternelement 5 des Statorblechs befindlich ist. Bezogen auf die Umfangsrichtung UR rechts von der Brücke B1 in dritter Ebene - also im dritten Statorblech 30 - ist die erste Brücke (Brücke ersten Typs) ebenfalls als B1 bezeichnet. Es handelt sich dabei um diejenige erste Brücke, welche wiederum zwischen ersten Sternelement 1 und zweiten Sternelement 5 des Statorblechs befindlich ist.

Fig. 3 zeigt schließlich einen Vertikalschnitt durch das Statorblechpaket 100 der Fig. 2, wobei der Schnitt - bezogen auf das hier unten dargestellte erste Statorblech 10 - durch die diametral zueinander liegenden Brücken B1 (Brücke ersten Typs) verläuft.

Gut zu erkennen ist, dass zwei benachbarte Statorbleche jeweils um 120 Grad zueinander verdreht liegen und stets jeweils zwei Brücken unterschiedlichen Typs übereinander liegen. Da die Statorbleche mit jeder Ebene um 120 Grad verdreht sind, wiederholt sich die Stapelsequenz mit jedem vierten Statorblech. Mit anderen Worten wären das erste, vierte, siebte usw. Statorblech in einer gedachten Projektion kongruent zueinander.

### Bezugszeichenliste

- 1..6: Sternelemente
- 10, 20, 30: Statorblech
- 100: Statorblechpaket

- AR: axiale Richtung
- M: Mittelpunkt
- B1..B3: Brücken
- N1..N3: Nuten
- R1..R3: Restabschnitt
- RR: radiale Richtung
- UR: Umfangsrichtung

## Patentansprüche

1. Statorblech (10) für ein Statorblechpaket (100) eines bürstenlosen Gleichstrommotors, wobei das Statorblech (10) in Umfangsrichtung (UR) vollständig geschlossenen ist und eine Mehrzahl von Sternelementen (1, 2, 3, 4, 5, 6) aufweist, wobei zwei benachbarte Sternelemente jeweils durch eine Brücke (B1, B2, B3) miteinander verbunden sind,
**dadurch gekennzeichnet, dass** die Brücke (B1) in radialer Richtung (RR) durch wenigstens eine Nut (N1, N2, N2', N3) verjüngt ist.

2. Statorblech (10) nach Anspruch 1,
**dadurch gekennzeichnet, dass** zumindest eine der Brücken (B3) eine Nut (N3) aufweist, die in radialer Richtung (RR) nach innen geöffnet ist.

3. Statorblech (10) nach Anspruch 1 oder 2,
**dadurch gekennzeichnet, dass** zumindest eine der Brücken (B1) eine Nut (N1) aufweist, die in radialer Richtung (RR) nach außen geöffnet ist.

4. Statorblech (10) nach einem der vorangehenden Ansprüche,
**dadurch gekennzeichnet, dass** ein durch die Nut (N1) verbleibender Restabschnitt (R1) einer ersten Brücke (B1) einen anderen radialen Abstand (L1) zu einem Mittelpunkt (M) des Statorblechs (10) aufweist, als ein durch die Nut (B3) verbleibender Restabschnitt (R3) einer zweiten Brücke (B3).

5. Statorblech (10) nach einem der vorangehenden Ansprüche,
**dadurch gekennzeichnet, dass** zumindest eine der Brücken (B2) eine in radialer (RR) Richtung nach innen geöffnete Nut (N2) und eine in radialer Richtung (RR) nach außen geöffnete Nut (N2') aufweist.

6. Statorblech (10) nach Anspruch 5,
**dadurch gekennzeichnet, dass** ein durch die Nuten (N2, N2') verbleibender Restabschnitt (R2) der Brücke (B2) einen anderen radialen Abstand (L2) zu einem Mittelpunkt (M) des Statorblechs (10) aufweist, als ein durch die Nut (N1, N3) verbleibender Restabschnitt der ersten und zweiten Brücke (B1, B3).

7. Statorblech (10) nach einem der vorangehenden Ansprüche,
**dadurch gekennzeichnet, dass** das Statorblech (10) paarweise gleichartig ausgebildete Brücken (B1, B2, B3) aufweist.

8. Statorblech (10) nach Anspruch 7,
**dadurch gekennzeichnet, dass** die paarweise gleichartig ausgebildeten Brücken (B1, B2, B3) jeweils diametral zueinander angeordnet sind.

9. Statorblech (10) nach einem der vorangehenden Ansprüche,
**dadurch gekennzeichnet, dass** die Nut (N1, N2, N2', N3), bezogen auf die Umfangsrichtung (UR), mittig zwischen zwei benachbarten Sternelementen angeordnet ist.

10. Statorblechpaket (100) für einen bürstenlosen Gleichstrommotor,
**dadurch gekennzeichnet, dass** das Statorblechpaket (100) eine Mehrzahl von identischen, in axialer Richtung (AR) aufeinandergestapelten Statorblechen (10, 20, 30) nach einem der vorangehenden Ansprüche aufweist, und insbesondere aus der Mehrzahl solcher Statorbleche (10, 20, 30) besteht.

11. Statorblechpaket nach Anspruch 10,
**dadurch gekennzeichnet, dass** zwei benachbarte Statorbleche inkongruent zueinander aufeinandergestapelt sind.

12. Bürstenloser Gleichstrommotor,
**dadurch gekennzeichnet, dass** der bürstenlose Gleichstrommotor ein Statorblech nach Anspruch 11 aufweist.
